Europäisches Patentamt

European Patent Office

Office européen des brevets

(19)

(11) Publication number: **0 157 560 B1**

# EUROPEAN PATENT SPECIFICATION

(45) Date of publication of patent specification: **12.06.91**    (51) Int. Cl.⁵: **C04B 35/52**

(21) Application number: **85302028.7**

(22) Date of filing: **25.03.85**

(54) Method of producing carbon materials.

(30) Priority: **26.03.84 JP 57892/84**

(43) Date of publication of application:
**09.10.85 Bulletin 85/41**

(45) Publication of the grant of the patent:
**12.06.91 Bulletin 91/24**

(84) Designated Contracting States:
**DE FR GB**

(56) References cited:
**EP-A- 0 156 051**
**DE-A- 3 231 729**

**CHEMICAL ABSTRACTS, vol. 94, no. 24, June
1981, page 123, abstract no. 194353b, Colum-
bus, Ohio, US; & JP-A-81 05 310
(KAWATETSU CHEMICAL INDUSTRY CO.
LTD.) 20-01-1981**

(73) Proprietor: **KAWASAKI STEEL CORPORATION
No. 1-28, 1-Chome Kitahonmachi-Dori
Chuo-Ku, Kobe-Shi Hyogo 651(JP)**

(72) Inventor: **Fukuda, Noriyoshi c/o Research
Laboratories
Kawasaki Steel Corporation 1, Kawasaki-Cho
Chiba City(JP)**
Inventor: **Nagasawa, Ken c/o Research Lab-
oratories
Kawasaki Steel Corporation 1, Kawasaki-Cho
Chiba City(JP)**

(74) Representative: **Overbury, Richard Douglas et
al
HASELTINE LAKE & CO Hazlitt House 28
Southampton Buildings Chancery Lane
London WC2A 1AT(GB)**

EP 0 157 560 B1

**Description**

This invention relates to a method of producing carbon materials, and more particularly to a method of producing a high density and high strength carbon material by starting from a calcined product having a benzene insoluble matter (BI) content of more than 95% by weight, a quinoline insoluble matter (QI) content of more than 80% by weight and a volatile matter (VM) content of 4-15% by weight.

The carbon materials obtained in accordance with the invention can be utilized for wide applications such as electrodes for steel-making, electric brushes, materials for nuclear reactors, materials for machines, and the like because they have various merits viz. they are good conductors of electricity and heat, they are stable at high temperatures in a non-oxidizing atmosphere, they have high hot strength, they are resistant to attack by acid, alkali or other chemicals, they are easy to machine, they have excellent self-lubrication properties, they have a small absorption area for thermal neutrons and they have excellent slowing-down power.

In general, carbon materials of this type are produced by mixing filler coke with a binder, molding the mixture, and firing or graphitizing the molded body. However, the materials are required to have many properties in accordance with their purpose of use which extends over a wide range, for example, from materials for machines and special electrode materials requiring high density and strength as far as possible to electric brushes requiring relatively low density and strength and high electrical resistivity.

As a method of producing such carbon materials in accordance with the purpose of use, it has hitherto been required to take very complicated production steps by changing the kind of the filler coke or the binder or the mixing ratio of filler coke to binder or by adding other additives such as natural graphite and the like to the mixture of filler coke and binder. That is, the aforementioned mixing of filler coke and binder complicates the working steps and degrades the working environment. Further, the filler coke itself is porous, and the coal tar pitch or synthetic resin to be used as the binder produces a large amount of pores on firing. As a result, the above method merely produces carbon materials having a density of about 1.7 g/cm³ and a bending strength of 500~600 kg/cm² at most, and it is difficult to produce carbon materials having higher density and strength. In addition, since the filler coke usually has an anisotropy, the resulting carbon material has also an anisotropy, so that it is difficult to produce carbon materials having isotropic properties.

Lately, the demands on the quality of the carbon material have become severe with industrial growth. As a result, various needs for carbon materials having isotropy and high density and strength are rapidly increasing. In response to such needs, the development of carbon materials having isotropy and high density and strength has been extensive in various fields. In Japanese Patent laid open NO. 49-23,791 or Japanese Patent Application Publication No. 51-29,523, for instance, there is proposed a method of producing isotropic high density carbon materials, wherein optically anisotropic mesophase spheres obtained by heating pitches as a raw material at a temperature of 350~500 °C are separated from the pitch matrix with a solvent, molded under pressure without a binder, fired and graphitized in the usual manner.

In this conventional method, however, quinoline having a strong extractability is used for the solvent separation of the optically anisotropic mesophase spheres, so that pitch fractions are removed from the optically anisotropic mesophase sphere and consequently the binding force of the optically anisotropic mesophase sphere itself is weakened and high densification thereof is difficult. Furthermore, fractionation in the solvent separation must be performed by repeatedly using various solvents in addition to quinoline, so that some of the low-boiling pitch fraction and solvents are liable to still remain in the resulting optically anisotropic mesophase spheres. Thus the molded bodies produced from such mesophase spheres are apt to exhibit cracking and blistering phenomena resulting from the remaining low-boiling pitch fraction and solvent during the firing step. Therefore, the above prior art has many problems if used as an industrial production method.

It is an object of the invention to overcome the aforementioned problems of the prior art.

The inventors have made various studies and found that an isotropic, high density carbon material can reliably be obtained by the use of a product obtained by leaving quinoline soluble but benzene insoluble matter, i.e. β-component, as a binder component with the optically anisotropic mesophase spheres during the solvent extraction and then subjecting them to a calcination treatment at 250~500 °C in an inert gas atmosphere. That is the β-component, as a binder reinforcement, is first left in the optically anisotropic mesophase spheres by using a tar middle oil, a gas oil or the like having an extractability less than that of quinoline in the solvent extraction step. However, the β-component itself would produce a large amount of volatile matter at the firing step in the production of the carbon materials resulting in cracking and blistering of the resulting molded body. Thus it is subjected to a subsequent calcination treatment at 250~500 °C in an inert gas atmosphere. In the calcination treatment, the solvent or low-boiling pitch fraction remaining in

EP 0 157 560 B1

the optically anisotropic mesophase spheres in the solvent extraction is removed by evaporation while a part of the β-component is subjected to a quinoline insolubilization reaction (QI reaction). By selecting a proper calcining temperature the QI produced from the β-component still holds a high binding ability compared with QI produced in the heat treatment, so that it is effective for producing carbon materials having high density and strength without causing cracking and blistering of the molded body at the firing step. Furthermore, it is not necessary to use many kinds of solvents in the solvent extraction step, and the object of the invention can be achieved by repeating the extraction operation with a single solvent two times at most. In brief, the inventors have confirmed that carbon materials can reliably be produced when the calcined product satisfies BI>95% by weight, QI>80% by weight and VM=4-15% by weight.

EP-A-0156051 discloses the production of carbon powders by heat treating coal tar pitch at a temperature of 350 to 600°C, subjecting the heat treated pitch to solvent extraction and filtration to obtain a residue containing less than 95 wt% quinoline insoluble matter and more than 90 wt% benzene insoluble matter and calcining the residue in an inert gas atmosphere at 250 to 500°C to obtain a calcined product containing more than 95 wt% benzene insoluble matter, more than 80 wt% of quinoline insoluble matter, and from 4 to 15 wt% of volatile matter. The calcined product, or size-classified portions thereof, can then be molded, fired and graphitized to form carbon materials. In most cases where the molding pressure is less than 1000 kg/cm², the bulk density of the resultant graphitised material is less than 1.85 g/cm³. Moreover, there is no suggestion that the β-component of the calcined product needs to be controlled in order to enable carbon materials of a bulk density of 1.85 g/cm³ or more to be reliably obtained at molding pressures of less than 1000 kg/cm². Indeed, there is no specific mention of the β-component content of the calcined product. However, it is theoretically possible that the calcined products specifically exemplified in Examples 1,2,3,4 and 5 have a β-component content of from 8.5 to 10.5% , from 8 to 9.5% , from 9 to 11% , from 1.5 to 2.5% , and from 8.5 to 10.5% , by weight. The use of calcined products having such β-component contents is excluded by the claims of the present application.

According to the present invention, there is provided a method of producing carbon material with a bulk density of from 1.85 to 2.05 g/cm³ by

(i) heat-treating coal tar pitch at 350 - 600°C,

(ii) extracting benzene soluble matter from the heat treated pitch by means of a solvent and filtering the benzene soluble matter to obtain a residue containing less than 95 % by weight of quinoline insoluble matter,

(iii) calcining the residue at a temperature of 250 to 500°C in an inert gas atmosphere to obtain a calcined product containing more than 95% by weight of benzene. insoluble matter, more than 80% by weight of quinoline insoluble matter, and from 4 to 15% by weight of volatile matter, and

(iv) molding, firing and graphitizing the calcined product in the absence of a binder to obtain carbon material characterised in that the calcined product contains from 2.5% to less than 8% or from more than 11 to 15% by weight of quinoline soluble benzene insoluble matter whereby carbon material having a bulk density of not less than 1.85 g/cm³ can be obtained when the molding is effected at a pressure of not more than 1000 kg/cm² (1.0 t/cm²).

By means of the present invention, even when finely dividing a calcined product of bulk mesophase formed from optically anisotropic mesophase spheres during further heat treatment of pitch, it is possible to produce isotropic, high density carbon materials without using a binder. Particularly, according to the invention, carbon materials having a bulk density of not less than 1.85 g/cm³, a bending strength of 200-1,300kg/cm², an electrical resistivity of 800-5,000Ω.cm and a Shore hardness of 40-95 can industrially and reliably be produced by changing the molding pressure so as to provide a given bulk density in accordance with the amount of the β-component in the calcined product, which may optionally be classified, satisfying BI>95% by weight, QI>80% by weight and VM=4-15% by weight.

For a better understanding of the invention, and to show how the same may be carried into effect, reference will now be made by way of example, to the accompanying drawings, in which:

Fig. 1 is a graph showing the relationship between the molding pressure and the bulk density of the graphitized material;

Fig. 2 is a graph showing the influence of QI in the coal tar pitch on the bulk density of the carbon material produced from the calcined and classified product (β=1.5%);

Fig. 3 is a graph showing the influence of QI in the heat-treated pitch on the bulk density of the carbon material produced from the calcined and classified product (β=3%);

Fig. 4 is a graph showing the influence of the amount of β-component after extraction and filtration on the bulk density of the carbon material produced from the calcined and classified product (β=1.5%); and

Fig. 5 is a graph showing the influence of the classification treatment of the calcined product on the bulk density of the carbon material.

3

As starting material for producing carbon materials according to the invention, there are used calcined products having BI>95% by weight, QI>80% by weight, VM = 4-15% by weight, and $\beta$-component = 1.5 to 15% by weight which are obtained by heat-treating coal tar pitch at a temperature of 350-600°C, subjecting the heat-treated pitch to solvent extraction and filtration to obtain an extraction residue having QI<95% by weight and then calcining the residue at a temperature of 250-500°C in an inert gas atmosphere. The starting material may be in the form of a classified product obtained by classifying the calcined product into desired particle sizes.

In the calcined and classified products, quinoline soluble but benzene insoluble $\beta$-component is left in the solvent extraction and filtration steps to form a binder component and then subjected to calcination treatment to prevent the occurrence of cracking and blistering in the subsequent firing of the molded body. Therefore, carbon materials can be produced by molding, firing and graphitizing such calcined or classified product without using a separate binder.

As a result of various investigations, it has been confirmed that the firing and graphitizing properties are largely influenced by the amount of $\beta$-component in the calcined or classified product and the molding pressure. The calcination step is to perform the removal of low-boiling volatile matters and to cause the QI reaction of a part of the $\beta$-component to prevent cracking and blistering on firing the molded body. In general, as the calcining temperature is raised, the QI reaction of the $\beta$-component accelerates and the amounts of the VM and $\beta$-component reduce. In the case of calcined and classified products having low amounts of VM and $\beta$-component, therefore, the probability of the occurrence of blistering and cracking during the firing and graphitizing steps after the molding becomes low, while the binding abilities of the $\beta$-component and QI produced by the calcination of part of the $\beta$-component decrease to reduce the shrinkage factor of the molded body during the firing and graphitizing steps. On the other hand, in the case of calcined and classified products having high amounts of VM and $\beta$-component, the probability of the occurrence of blistering and cracking during the firing and graphitizing steps after the molding becomes high, while the binding abilities of the $\beta$-component and QI produced by calcination of part of the $\beta$-component are still high, which shows a tendency to increase the shrinkage factor of the molded body in the firing and graphitizing steps.

As a result of further studies on the properties of the calcined and classified products, it has been found that the amount of $\beta$-component contained in the calcined or classified product to be used in the invention and the molding pressure largely contribute to the properties of the resulting carbon material. That is, the relationship between the molding pressure and the density and strength of the graphitized carbon material varies in accordance with the amount of $\beta$-component in the calcined or classified product. For instance, for a given molding pressure, calcined and classified products having a large amount of $\beta$-component provide carbon materials having higher density and strength, while calcined and classified products having a small amount of $\beta$-component provide carbon materials having relatively low density and strength. On the other hand, when using calcined or classified products having a small amount of $\beta$-component, even if the molding is carried out at a pressure higher than that for the calcined or classified product having a large amount of $\beta$-component, the production of carbon materials is possible without causing blistering and cracking at the firing step.

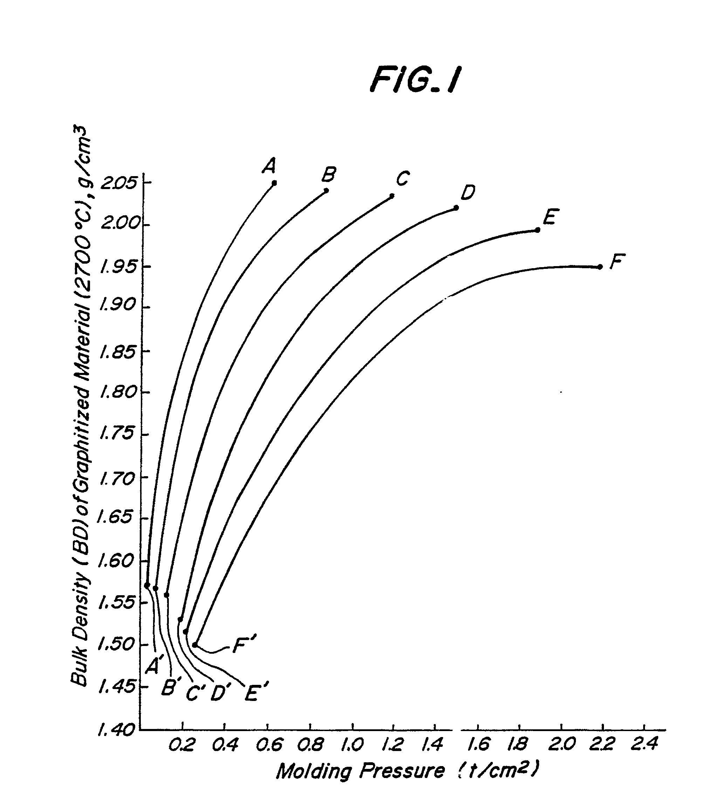

In Fig. 1 there is shown the relationship between the molding pressure ($t/cm^2$) and the bulk density of the graphitized carbon material, wherein curves AA', BB', CC', DD', EE' and FF' correspond to the use of calcined and classified products having 15% by weight, 13% by weight, 9% by weight, 4% by weight, 1.5% by weight and 0% by weight of $\beta$-component, respectively.

In Fig. 1, points A, B, C, D, E and F show the maximum molding pressures for the reliable production of carbon material in dependence on the amount of the $\beta$-component, respectively, while points A', B', C', D', E' and F' show the minimum molding pressures for molding without a binder in dependence on the amount of the $\beta$-component, respectively.

As seen from Fig. 1, if the molding pressure is the same, the bulk density of the carbon material increases as the amount of $\beta$-component increases, while the molding pressure for the reliable production of carbon material becomes larger as the amount of $\beta$-component decreases. Therefore, carbon materials having a desired bulk density can be produced by selecting the molding pressure in accordance with the amount of $\beta$-component contained in the calcined or classified product.

For a given amount of $\beta$-component in the calcined and classified products, the bulk density of the carbon material is somewhat influenced by QI in the coal tar pitch, QI after heat treatment of the coal tar pitch and the amount of $\beta$-component after extraction and filtration.

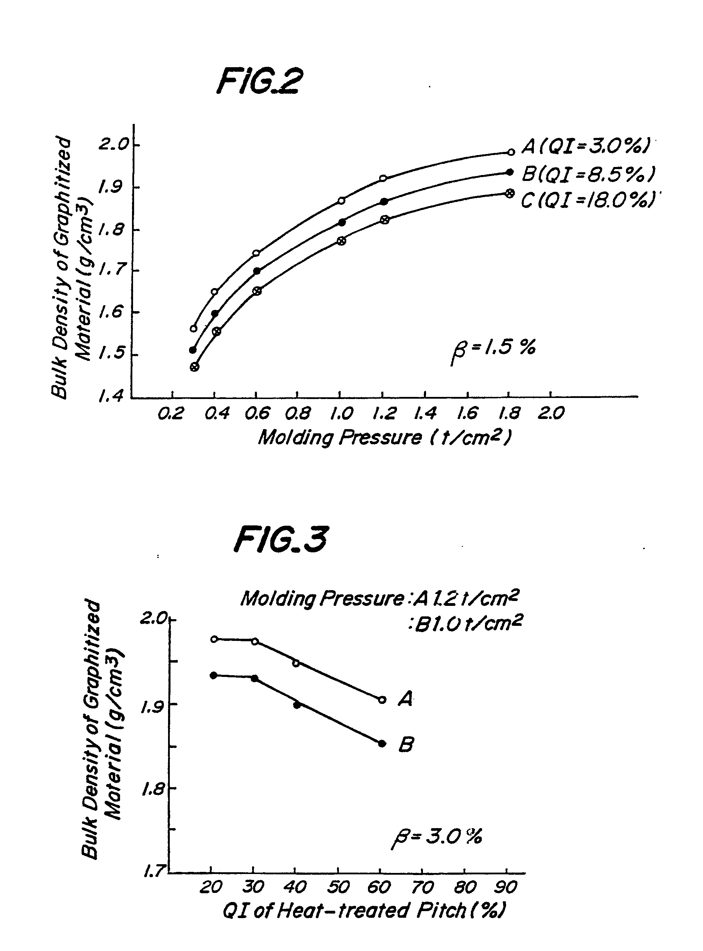

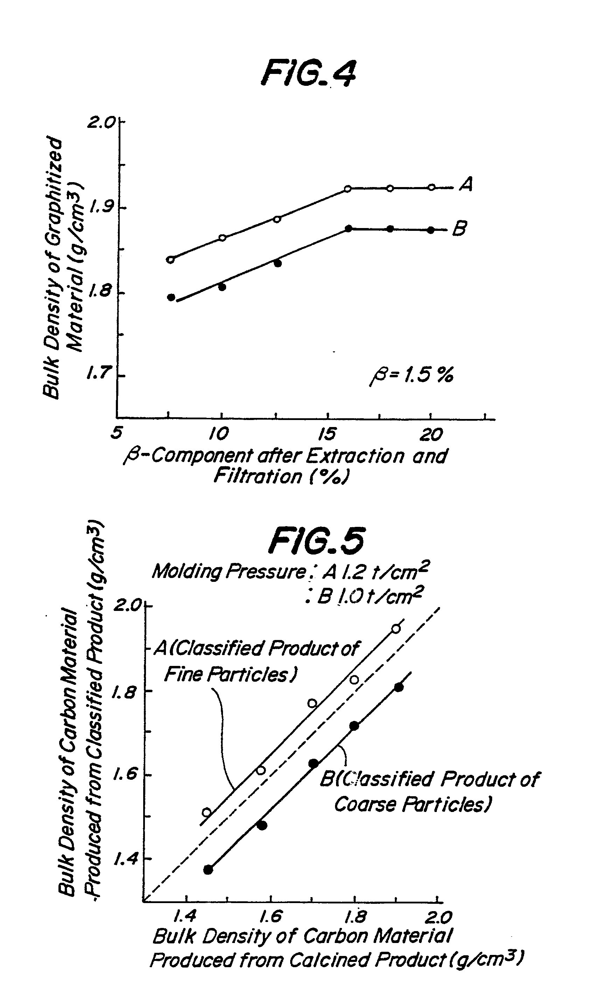

In Figs. 2-4 there are shown the influences of QI in the coal tar pitch, QI in the heat-treated pitch and the amount of $\beta$-component after extraction and filtration, respectively on the bulk density of the carbon material when other conditions are the same. In Fig. 5 there is further shown the influence of the classification of the calcined product, i.e. the results obtained when using a classified product consisting mainly of finely divided particles and a classified product consisting mainly of coarse particles.

In the embodiment of Fig. 1 there is used a classified product prepared by starting from coal tar pitch having QI = 3.0% so as to obtain QI after heat treatment of 30% and an amount of $\beta$-component after extraction and filtration of 20%. It is apparent that the absolute value of the bulk density in Fig. 1 varies in accordance with the relationships shown in Figs. 2-5. As a result, carbon materials having an arbitrary bulk density can be produced by selecting the molding pressure based on the amount of $\beta$-component in the calcined or classified product in view of the relationships shown in Figs. 2-5.

Moreover, the properties of the carbon materials produced from the calcined and classified products are determined by the bulk densities of the carbon materials. In the carbon material, the bulk density is positively related to each of bending strength and Shore hardness, and is negatively related to electrical resistivity, so that the bulk density substantially determines other properties.

For instance, the classified product of Fig. 1 has the following relations:

$$Bs = 2030 \, BD - 2900,$$
$$\rho = -4650 \times BD + 10480, \text{ and}$$
$$Hs = 91 \times BD - 90.5,$$

wherein BD is the bulk density (g/cm³), Bs is the bending strength (kg/cm²), $\rho$ is the electrical resistivity ($\mu\Omega \cdot cm$) and Hs is the Shore hardness.

When using coal tar pitch containing large amounts of QI, this tends to give a higher electrical resistivity as compared with pitch containing small amounts of QI for the same bulk density, while the electrical resistivity tends to reduce for the same bulk density as the QI becomes higher after heat treatment. On the other hand, the interrelation of the bending strength and Shore hardness with the bulk density is substantially unchanged irrespective of other conditions.

As mentioned above, the relationship between the amount of the $\beta$-component in the calcined or classified product and the molding pressure as shown in Fig.1 is obtained by defining the QI content of the raw pitch, the QI content after heat treatment and the amount of $\beta$-component after extraction and filtration. Therefore, it is possible to produce carbon materials having desired properties by selecting the molding pressure in accordance with the amount of the $\beta$-component.

Further, the QI content of the raw pitch, the QI content after heat treatment and the amount of $\beta$-component after extraction and filtration can easily be controlled in the course of the production of the calcined and classified products. That is, the QI content of the raw pitch is determined by the kind of pitch to be used, and the QI content after heat treatment is controlled by the heat treating conditions, i.e. time and temperature. Further, the amount of the $\beta$-component after extraction and filtration is determined by the kind and amount of the solvent used in the extraction. For instance, a carbon material having the following properties:

bulk density (BD) (g/cm³) = 1.85-2.05 g/cm³
bending strength (Bs) (kg/cm²) = 100~1,300,
electrical resistivity ($\rho$) ($\mu\Omega \cdot cm$) = 800~5,000,
Shore hardness (Hs) (°) = 40~95

can be produced by the method according to the invention. The bending strength and Shore hardness are positively related to the bulk density, respectively, and are finally determined by the value of the bulk density, while the electrical resistivity is negatively related to the bulk density but is also influenced by the QI content of the raw pitch and the QI content of the heat-treated pitch.

In general, if it is desired to obtain carbon materials having high density and strength when it is difficult to obtain high-pressure molding equipment requiring a high equipment cost, it is possible to produce the carbon materials even under low pressure by using a calcined or classified product having a large amount of $\beta$-component instead of a calcined or classified product having a small amount of $\beta$-component. On the other hand, if it is intended to obtain low density carbon materials, calcined or classified product having a large amount of $\beta$-component easily and largely affects the properties of the resulting carbon materials even when the molding pressure slightly changes in a region of low molding pressure. Therefore, the use of a calcined or classified product having a small amount of $\beta$-component can reliably produce carbon materials having a small scattering degree in industry. Such a selection can easily be attained merely by selecting the calcining temperature in the production of the calcined product and this is very useful.

The following Examples are given to illustrate the invention and are not intended as limitations thereof.

Example 1

A coal tar pitch having a softening temperature (R & B method) of 80°C, BI of 20% by weight and QI of 3.6% by weight was heat-treated in a heat treating vessel at a temperature of 445°C for 10 minutes to obtain a heat-treated pitch having a BI content of 51.0% by weight and a QI content of 29.5% by weight. The heat-treated pitch was subjected to solvent extraction twice using 600 parts by weight of a tar middle oil based on 100 parts by weight of the pitch. The tar middle oil had a boiling point of 140~270°C. The two extraction operations were carried out at a temperature of 120°C for 1 hour, respectively.

After the extraction and filtration, the residue had a BI content of 95.0% by weight, a QI content of 74.5% by weight and a $\beta$-component of 20.5% by weight.

Then, the residue was calcined at a temperature of 350°C to obtain a calcined product having a BI content of 98.5% by weight, a QI content of 94.5% by weight, a $\beta$-component of 4.0% by weight and a VM content of 8.5% by weight. This calcined product was classified into 85% by weight of fine particles and 15% by weight of coarse particles. Thereafter, each of the calcined product and the classified product having fine particles was molded without a binder. Moreover, the properties of the classified product were the same as in the calcined product. The molding pressures were 0.4 t/cm$^2$, 0.6 t/cm$^2$, 0.8 t/cm$^2$ or 1.0 t/cm$^2$ and the size of the molded body was 100 mm (diameter) x 100 mm (height).

Then, the molded body was fired and graphitized in the usual manner. The firing was carried out at a temperature of 1,000°C and a rate of 0.17°C/min. The graphitization was carried out in a Tammanm furnace at a temperature of 2,700°C, wherein the graphitizing rate was 8.3°C/min from room temperature up to 1,000°C and 5.7°C/min from 1,000°C up to 2,700°C. The physical properties of the thus graphitized carbon material are shown in the following Table 1.

Table 1

| | Calcined product | | | | Classified product | | | |
|---|---|---|---|---|---|---|---|---|
| Molding pressure (t/cm²) | 0.4 | 0.6 | 0.8 | 1.0 | 0.4 | 0.6 | 0.8 | 1.0 |
| Bulk density BD (g/cm³) | 1.63 | 1.78 | 1.85 | 1.90 | 1.73 | 1.82 | 1.90 | 1.94 |
| Bending strength Bs (kg/cm²) | 500 | 730 | 870 | 950 | 620 | 800 | 940 | 1,050 |
| Electrical resistivity ρ (μΩ·cm) | 2,700 | 2,150 | 1,850 | 1,620 | 2,450 | 2,010 | 1,650 | 1,400 |
| Shore hardness Hs | 62 | 71 | 78 | 83 | 67 | 75 | 83 | 86 |

Example 2

The same residue as in Example 1 was calcined at a temperature of 320°C or 400°C to obtain 320°C calcined product or 400°C calcined product. Each of these calcined products was classified into 90% by weight of fine particles and 10% by weight of coarse particles. Then, the 320°C classified product (fine particles) was molded at molding pressures of 0.2, 0.4, 0.6 or 0.8 t/cm², while the 400°C classified product (fine particles) was molded at molding pressures of 0.4, 0.8, 1.2 or 1.8 t/cm².

The 320°C classified product had a BI content of 96.5% by weight, a QI content of 84.0% by weight, a $\beta$-component of 12.0% by weight and a VM content of 10.5% by weight. The 400°C classified product had a BI content of 99.0% by weight, a QI content of 97.5% by weight, a $\beta$-component of 1.5% by weight and a VM content of 6.5% by weight. The size of the resulting molded body was the same as in Example 1.

Thereafter, the molded body was subjected to firing and graphitizing treatments under the same conditions as in Example 1. The physical properties of the thus graphitized carbon material are shown in the following Table 2.

Table 2

| | 320°C Classified product (fine particles) | | | | 400°C Classified product (fine particles) | | | |
|---|---|---|---|---|---|---|---|---|
| Molding pressure (t/cm²) | 0.2 | 0.4 | 0.6 | 0.8 | 0.4 | 0.8 | 1.2 | 1.8 |
| Bulk density BD (g/cm³) | 1.76 | 1.91 | 1.96 | 2.02 | 1.64 | 1.81 | 1.92 | 1.97 |
| Bending strength Bs (kg/cm²) | 650 | 980 | 1,080 | 1,180 | 450 | 765 | 980 | 1,100 |
| Electrical resistivity ρ (μΩ·cm) | 2,300 | 1,600 | 1,350 | 1,100 | 2,900 | 2,050 | 1,540 | 1,300 |
| Shore hardness Hs | 70 | 83 | 88 | 93 | 59 | 75 | 83 | 87 |

As mentioned above, according to the invention carbon materials having high density and strength can surely and easily be produced without cracking and blistering.

## Claims

1. A method of producing carbon material with a bulk density of from 1.85 to 2.05 g/cm³ by
   (i) heat-treating coal tar pitch at 350 - 600° C,
   (ii) extracting benzene soluble matter from the heat treated pitch by means of a solvent and filtering the benzene soluble matter to obtain a residue containing less than 95% by weight of quinoline insoluble matter,
   (iii) calcining the residue at a temperature of 250 to 500° C in an inert gas atmosphere to obtain a calcined product containing more than 95% by weight of benzene insoluble matter, more than 80% by weight of quinoline insoluble matter, and from 4 to 15% by weight of volatile matter, and
   (iv) molding, firing and graphitizing the calcined product in the absence of a binder to obtain carbon material characterised in that the calcined product contains from 2.5% to less than 8% or from more than 11% to 15% by weight of quinoline soluble benzene insoluble matter whereby carbon material having a bulk density of not less than 1.85 g/cm³ can be obtained when the molding is effected at a pressure of not more than 1000 kg/cm² (1.0 t/cm²).

2. A method according to claim 1 wherein the calcined product is subjected to size classification prior to molding.

## Revendications

1. Procédé de fabrication de matériau en carbone de masse volumique apparente comprise entre 1.85 et 2.05 g/cm³, par
   (i) traitement thermique du brai de houille à 350 - 600° C,
   (ii) extraction de la matière soluble dans le benzène à partir du brai traité par la chaleur, au moyen d'un solvant, et filtration de la matière soluble dans le benzène pour obtenir un résidu contenant moins de 95% en poids de matière insoluble dans la quinoléine,
   (iii) calcination du résidu à une température de 250 à 500° C dans une atmosphère de gaz inerte pour obtenir un produit calciné renfermant plus de 95% en poids de matière insoluble dans le benzène, plus de 80% en poids de matière insoluble dans la quinoléine et de 4 à 15% en poids de matière volatile, et
   (iv) moulage, cuisson et graphitisation du produit calciné en l'absence d'un liant pour former un matériau en carbone, caractérisé en ce que le produit calciné renferme de 2.5% à moins de 8% ou bien de plus de 11% a 15% en poids de matière soluble dans la quinoléine et insoluble dans le benzène, ce qui permet d'obtenir un matériau en carbone de masse volumique apparente non inférieure à 1.85g/cm³ lorsque le moulage est effectué sous une pression ne dépassant pas 1000 kg/cm² (1.0 t/cm²).

2. Procédé selon la revendication 1, dans lequel on soumet le produit calciné à une classification granulométrique avant moulage.

## Ansprüche

1. Verfahren zur Herstellung von Kohlenstoffkörpern mit einer Schüttdichte von 1,85 bis 2,05 g/cm³ durch
   (i) Hitzebehandlung eines Steinkohlenteerpechs bei 350 bis 600° C,
   (ii) Extraktion des benzollöslichen Anteils aus dem hitzebehandelten Pech mittels eines Lösungsmittels und Abfiltrieren des benzollöslichen Anteils zwecks Gewinnung eines Rückstandes, der weniger als 95 Gew.-% an chinolinunlöslichen Anteilen enthält,
   (iii) Calcinieren des Rückstandes bei einer Temperatur von 250 bis 500° C in einer inerten Gasatmosphäre zwecks Gewinnung eines calcinierten Produkts, das mehr als 95 Gew.-% an benzolunlöslichen Anteilen, mehr als 80 Gew.-% an chinolinunlöslichen Anteilen und 4 bis 15 Gew.-% an flüchtigen Bestandteilen enthält und
   (iv) Verformen, Befeuerung und Graphitierung des calcinierten Produkts in Abwesenheit eines Bindemittels zwecks Erhalt der Kohlenstoffkörper,
   dadurch **gekennzeichnet,**
   daß das calcinierte Produkt von 2,5 bis weniger als 8 oder von mehr als 11 bis 15 Gew.-% an chinolinlöslichen, benzolunlöslichen Anteilen enthält, wodurch Kohlenstoffkörper mit einer Schüttdichte von nicht weniger als 1,85 g/cm$^3$ erhalten werden, sofern die Formgebung bei einem Druck von nicht mehr als 1000kg/cm$^2$ (1,0 t/cm$^2$) erfolgt.

2. Verfahren gemäß Anspruch 1, wobei das calcinierte Produkt einer Klassierung vor dem Verformen unterworfen wird.

FIG.1

FIG.2

FIG.3

13

## FIG. 4

Graph: Bulk Density of Graphitized Material (g/cm³) vs β-Component after Extraction and Filtration (%); curves A and B; β = 1.5 %

## FIG. 5

Molding Pressure : A 1.2 t/cm²
: B 1.0 t/cm²

A (Classified Product of Fine Particles)

B (Classified Product of Coarse Particles)

Graph: Bulk Density of Carbon Material Produced from Classified Product (g/cm³) vs Bulk Density of Carbon Material Produced from Calcined Product (g/cm³)